# EUROPÄISCHE PATENTSCHRIFT

(11) **EP 2 463 629 B1**
(45) Veröffentlichungstag und Bekanntmachung des Hinweises auf die Patenterteilung: **05.12.2018**
(21) Anmeldenummer: 11185998.9
(22) Anmeldetag: 20.10.2011
(51) Int. Cl.: G01F 1/58, G01F 15/18, G01F 1/60

(54) **Magnetisch-induktives Durchflussmessgerät**
Magnetic-inductive flow measuring apparatus
Débitmètre à induction magnétique

(30) Priorität: 22.11.2010 DE 102010061720
(43) Veröffentlichungstag der Anmeldung: 13.06.2012
(73) Patentinhaber: Endress + Hauser Flowtec AG, 4153 Reinach (CH)
(72) Erfinder: Sulzer, Thomas, 79639 Grenzach-Wyhlen (DE); Oudoire, Patrick, 68360 Soultz (FR)
(74) Vertreter: Andres, Angelika Maria

(56) Entgegenhaltungen:
- DE-A1-102007 004 826
- JP-A- 4 324 320
- JP-A- 5 107 091
- US-A- 4 428 241
- US-A- 5 325 728
- US-A1- 2009 025 486
- US-A1- 2009 107 230

## Beschreibung

Die vorliegende Erfindung betrifft ein magnetisch-induktives Durchflussmessgerät mit einem Messrohr, welches im Betrieb von einem Medium in Richtung der Längsachse des Messrohres durchströmt wird, und mit einem Magnetsystem, das derart ausgestaltet ist, dass es ein das Messrohr durchsetzendes, im wesentlichen quer zur Längsachse des Messrohrs verlaufendes Magnetfeld erzeugt, mit zumindest einer mit dem Medium koppelnden Messelektrode, die in einem im wesentlichen senkrecht zum Magnetfeld liegenden Bereich in einer Bohrung in der Wandung des Messrohres angeordnet ist.

Magnetisch-induktive Durchflussmessgeräte nutzen für die volumetrische Strömungsmessung das Prinzip der elektrodynamischen Induktion aus und sind aus einer Vielzahl von Veröffentlichungen bekannt. Senkrecht zu einem Magnetfeld bewegte Ladungsträger des Mediums induzieren eine Messspannung in im Wesentlichen senkrecht zur Durchflussrichtung des Mediums und senkrecht zur Richtung des Magnetfeldes angeordneten Messelektroden. Die in die Messelektroden induzierte Messspannung ist proportional zu der über den Querschnitt des Messrohres gemittelten Strömungsgeschwindigkeit des Mediums, also proportional zum Volumenstrom. Ist die Dichte des Mediums bekannt, lässt sich der Massestrom in der Rohrleitung bzw. in dem Messrohr bestimmen. Die Messspannung wird üblicherweise über ein Messelektrodenpaar abgegriffen, das bezüglich der Koordinate entlang der Messrohrachse in dem Bereich maximaler Magnetfeldstärke angeordnet ist und wo folglich die maximale Messspannung zu erwarten ist. Die Elektroden sind üblicherweise galvanisch mit dem Medium gekoppelt; es sind jedoch auch magnetisch-induktive Durchflussmessgeräte mit berührungslos kapazitiv koppelnden Elektroden bekannt.

Die DE 10 2007 004 826 A1 und DE 10 2007 004 827 A1 offenbaren ein magnetisch-induktives Durchflussmessgerät mit einem Gehäuserahmen, welcher in den Druckschriften als Führungsmittel 4 bezeichnet wird. An den Ecken dieses Gehäuserahmens sind Positionierzapfen 8 angeordnet. Fig. 6a zeigt ein Magnetsystem 17 welches durch den Gehäuserahmen gehalten wird. Um den Gehäuserahmen 4 ist eine sogenannte starr-flex-Leiterplatte angeordnet, mit starren Leiterplattensegmenten 19a und flexiblen Leiterplattensegmenten 19b. Diese wird um den Gehäuserahmen 4 gewickelt und weist daher Löcher 19c, zum Durchführen der Positionierzapfen 8 auf. Dabei ist die starr-flex-Leiterplatte 30/34 um das Magnetsystem und das Messrohr angeordnet. Es ist in Fig 6D ein Luftraum zwischen der Leiterplatte 30 und dem Magnetsystem 48 erkennbar.

Die US 2009/0025486 A1 zeigt in Fig. 10&11 eine konstruktive Variante, in welcher ein Spulensystem B auf einer Leiterplatte angeordnet ist.

Die JP 5 107 091 A offenbart ein magnetisch-induktives Durchflussmessgerät sind die Messelektroden an einem Flexprint-board 21 (siehe Abs. 0009) angeordnet und weist eine Ausbildung eines angewinkelten Magnetfeldes durch Anordnung von vier Spulen entlang der Messrohrwandung.

Die US 4,428,241 offenbart in Fig .3 ein Durchflussmessgerät mit einer Leiterplatte 26 mit einer Öffnung zur Aufnahme eines Spulenkerns.

Die JP 4 324 320 A1 ein magnetisch-induktives Durchflussmessgerät welches als Klemme ausgebildet ist. Es weist zwei Klemmschenkel zur Aufnahme eines Messrohres auf.

Die US 5,325,728 offenbart eine Leiterplatte 100 und Anschlusslitzen 28 für ein Messrohr. Ein komplexer Spulenkern 50 ist in Fig. 11 auf der Leiterplatte aufgesetzt.

Das Messrohr kann dabei entweder aus einem elektrisch leitfähigen, nichtmagnetischen Material, z.B. Edelstahl, gefertigt sein, oder aus einem elektrisch isolierenden Material bestehen. Ist das Messrohr aus einem elektrisch leitfähigen Material gefertigt, so muss es in dem mit dem Medium in Kontakt kommenden Bereich mit einem Liner aus einem elektrisch isolierenden Material ausgekleidet sein. Der Liner besteht je nach Temperatur und Medium beispielsweise aus einem thermoplastischen, einem duroplastischen oder einem elastomeren Kunststoff. Es sind jedoch auch magnetisch-induktive Durchflussmessgeräte mit einer keramischen Auskleidung bekannt.

Eine Elektrode lässt sich im Wesentlichen in einen Elektrodenkopf, der zumindest teilweise mit einem Medium, welches das Messrohr durchströmt, in Kontakt kommt, und einen Elektrodenschaft, der fast vollständig in der Wandung des Messrohres eingebracht ist, unterteilen.

Die Elektroden sind neben dem Magnetsystem die zentralen Komponenten eines magnetisch-induktiven Durchflussmessgerätes. Bei der Ausgestaltung und Anordnung der Elektroden ist darauf zu achten, dass sie sich möglichst einfach in dem Messrohr montieren lassen und dass nachfolgend im Messbetrieb keine Dichtigkeitsprobleme auftreten; darüber hinaus sollen sich die Elektroden durch eine empfindliche und gleichzeitig störungsarme Messsignalerfassung auszeichnen.

Neben den Messelektroden, die zum Abgriff eines Messsignals dienen, werden oftmals zusätzliche Elektroden in Form von Bezugs- oder Erdungselektroden in das Messrohr eingebaut, die dazu dienen, ein elektrisches Referenzpotential zu messen oder teilgefüllte Messrohre zu erkennen.

Die Aufgabe der Erfindung besteht darin, ein kostengünstig herzustellendes magnetisch-induktives Durchflussmessgerät bereit zu stellen.

Die Aufgabe wird gelöst durch den Gegenstand des unabhängigen Anspruchs 1. Weiterbildungen und Ausgestaltungen der Erfindung finden sich in den Merkmalen der jeweils abhängigen Ansprüche wider.

Die Erfindung lässt zahlreiche Ausführungsformen zu. Einige davon sollen hier kurz anhand der nachfolgenden Figuren näher erläutert werden. Gleiche Elemente sind in den Figuren mit gleichen Bezugszeichen versehen.
- Fig. 1: zeigt wesentliche Bestandteile eines erfindungsgemäßen magnetischinduktiven Durchflussmessgeräts dreidimensional in der Draufsicht,
- Fig. 2: zeigt die Bestandteile aus Fig. 1 in der Draufsicht vor der Montage.

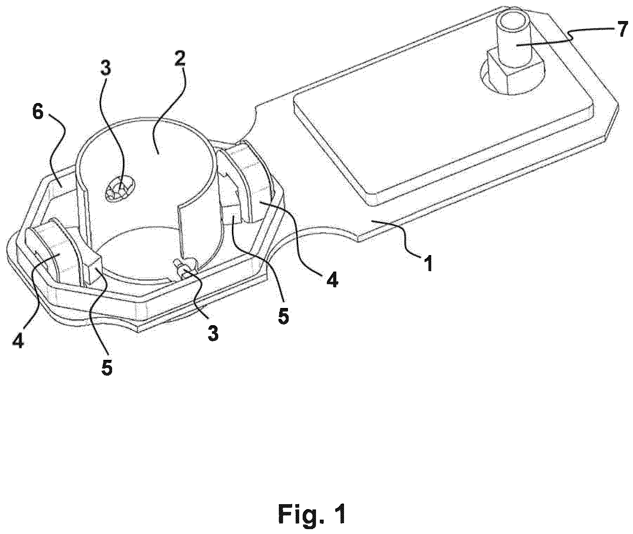

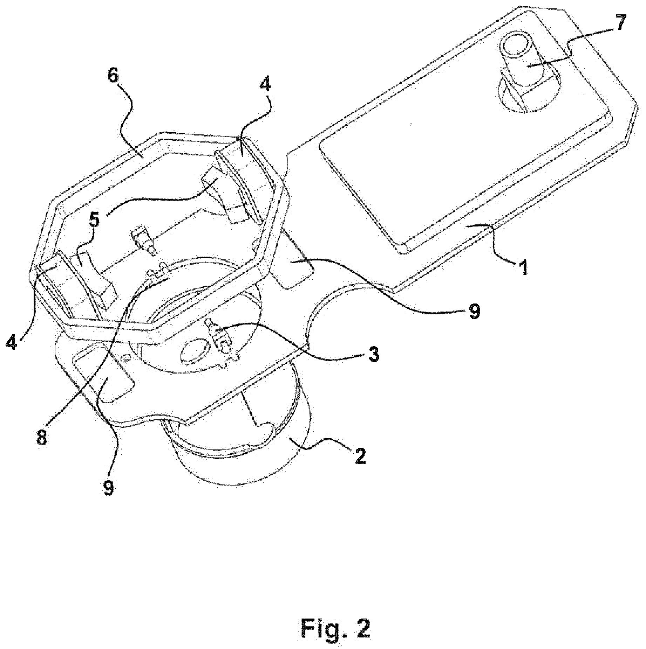

In Fig.1 und in Fig. 2. ist eine Leiterplatte 1 dargestellt. Sie ist Bestandteil eines magnetisch-induktiven Durchflussmessgeräts. An dieser Leitplatte 1 ist ein Magnetsystem, bestehend aus zwei Spulen 4, zwei Polschuhen 5 und einem Rückführungsblech 6 verankert. Gemäß einer Ausführungsform der Erfindung wird auch die Messelektrode 3, in dieser Ausgestaltung sind es zwei Messelektroden 3, an der Leiterplatte 1 verankert. Die genannten Bauteile 3, 4, 5 und 6 können einerseits wie herkömmliche elektronische Bauteile auf die Leiterplatte 1 gesteckt sein oder, wie hier in Fig. 2 zu sehen, weist die Leiterplatte 1 zwei zu den Spulen kongruente Bohrungen 9 auf, in welche die Spulen 4 gesteckt sind und damit direkt an der Leiterplatte 1 befestigt. Die Spulen 4 können dabei mit den Polschuhen 5 und dem Rückführungsblech verbunden sein, welche hier auf der Leiterplatte 1 aufliegen. Des Weiteren ist an der Leiterplatte 1 ein Messrohr 2, hier im Teilschnitt veranschaulicht, verankert.

Die Messelektroden 3 sind in der Wandung des Messrohrs 2 angeordnet. Durch das Messrohr 2 fließt im Betrieb des magnetisch-induktiven Durchflussmessgeräts ein Medium, dessen Durchfluss mit dem erfindungsgemäßen magnetisch-induktiven Durchflussmessgeräts gemessen wird. Die Messelektroden 3 koppeln dabei das Medium. Die Leiterplatte 1 weist gemäß einer Ausführungsform ein zur Mantelfläche des Messrohrs 2 kongruente Bohrung 8 auf, in welche das Messrohr 2 gesteckt wird. Es kann sich hier um eine so genannte Presspassung handeln, so dass das Messrohr 2 im Presssitz direkt an der Leiterplatte 1 befestigt ist, analog zur oben beschriebenen Verankerung der Spulen 4.

Durch den jeweils direkten Kontakt der besagten Bauteile 3, 4, 5 und 6 mit der Leiterplatte 1 sind keine separaten Befestigungsmittel vorgesehen. Die Bauteile 3, 4, 5 und 6 werden von der Leiterplatte 1 getragen, d.h. mechanische Kräfte auf diese Bauteile 3, 4, 5 und 6, im Regelfall nur die jeweiligen Gewichtskräfte, wirken auf die Leiterplatte 1 und werden auf diese übertragen. Wie üblich liegen die Spulenachsen und die Messelektroden 3 in einer gemeinsamen Ebene, hier der Ebene der ebenen Leiterplatte 1, senkrecht zueinander und senkrecht zur Längsachse des Messrohrs 2.

Da weitere Elektronikbauteile zumindest zur Weiterverarbeitung der von den Messelektroden abgegriffenen Spannungen, welche in das Medium induziert wurden, auf der Leiterplatte angeordnet sind, beispielsweise auch ein USB-Anschluss zur Energieversorgung der Elektronikbauteile auf der Leiterplatte, sind separate Kabel zur Verbindung der einzelnen Bauelemente nicht notwendig. Die elektrische Verbindung zwischen den Bauelementen erfolgt durch Leiterbahnen auf der Leiterplatte. Der USB-Anschluss ist hier mittels des Steckverbinders 7 veranschaulicht.

Vorteile bietet dieses magnetisch-induktive Durchflussmessgerät u.a. in einer Minimierung der Herstellungskosten im Vergleich zu herkömmlichen Geräten des Stands der Technik, z.B. durch nicht mehr benötigte Kabel und Befestigungselemente für die genannten Bauteile. Des Weiteren sind solche magnetisch-induktiven Durchflussmessgeräte bauartbedingt sehr klein.

Neben den genannten Elektronikbauteilen zur Weiterverarbeitung der von den Messelektroden abgegriffenen Spannungen können noch zusätzlich Elektronikbauteile zur Steuerung des Magnetfelds auf der Leiterplatte 1 angeordnet sein. Diese können dann ebenfalls mit der Energie aus dem USB-Anschluss versorgt werden. Eine Alternative Energieversorgung besteht darin, dass ein Akkumulator oder eine Batterie auf der Leiterplatte angeordnet ist, die die Elektronikbauteile mit der benötigten Energie versorgt.

Darüber hinaus kann das Messrohr 2 direkt in die Leiterplatte 1 integriert sein, z.B. dadurch, dass das Messrohr 2 in einem Urformverfahren hergestellt ist, wobei die Leiterplatte 1 Teil des formgebenden Werkzeugs ist. Bevorzugte Materialen für die Herstellung des Messrohrs, insbesondere für Wasser-/Abwasseranwendungen, sind z.B. PEEK, PE, PP, PB, PA, POM, PPS, PES, PC, und deren Untergruppen. Alternativ besteht das Messrohr aus einem üblicherweise verwendeten Stahl wie z.B. 1.4301, 1.4435. Auch ist es möglich, dass Messrohr 2 unabhängig von der Leiterplatte 1 herzustellen, z.B. als Spritzgussteil. In den beiden letztgenannten Fällen ist es durch eine Bohrung in der Leiterplatte 1 durchgeführt. In jedem Fall kann das Messrohr 2 hier nicht skizzierte Prozessanschlüsse aufweisen. Das Messrohr 2 weist eine Nennweite kleiner oder gleich DN 100 auf. Insbesondere liegt dessen Nennweite zwischen DN 2 und DN 50, oder gar nur zwischen DN 2 und DN 25.

Ein geschlossenes magnetisch-induktives Durchflussmessgerät wird durch ein Gehäuse um die Leiterplatte 1 hergestellt, welches Gehäuse die Elektronikbauteile auf der Leiterplatte 1 umgibt. Wird das Gehäuse beispielsweise aus spritzgegossenen oder tiefgezogenen und zueinander kongruenten Schalen hergestellt, weist es eine Bohrung zur Durchführung des Messrohrs 2 auf.

Alternativ wird das Gehäuse gemeinsam mit dem Messrohr 2 oder separat dazu in einem Urformverfahren hergestellt, Die Leiterplatte wird vollständig umgossen. Die Materialien des Gehäuses können dabei gleich denen des Messrohrs sein, insbesondere dann, wenn beide Bauteile in einem Verfahrensschritt hergestellt werden, oder das Gehäuse besteht aus PUR, Epoxysystemen oder Hotmeltsystemen.

In beiden Fällen kann das magnetisch-induktive Durchflussmessgerät ein Display oder einen Stecker 7 bzw. eine Kabelführung aufweisen, welche dann selbstverständlich nicht vollständig vom Gehäuse umgeben werden. Es sind dann entweder entsprechende Ausnehmungen im Gehäuse vorzusehen oder die genannten Bauteile fungieren, wie die Leiterplatte 1 bei der Herstellung des Messrohrs 2 in einer Ausgestaltung der Erfindung, als formgebendes Werkzeug.

Um noch mehr Flexibilität bei der Produktion des magnetisch-induktiven Durchflussmessgeräts zu erhalten, kann es sich bei der Leiterplatte um einen so genannten Flexprint handeln.

### Bezugszeichenliste

- 1: Leiterplatte
- 2: Messrohr
- 3: Messelektrode
- 4: Spule
- 5: Polschuh
- 6: Rückführungsblech
- 7: Steckverbinder
- 8: Bohrung
- 9: Bohrung

## Patentansprüche

1. Magnetisch-induktives Durchflussmessgerät mit einem Messrohr (2), welches im Betrieb von einem Medium in Richtung der Längsachse des Messrohrs (2) durchströmt wird, und mit einem Magnetsystem, das derart ausgestaltet ist, dass es ein das Messrohr (2) durchsetzendes, im wesentlichen quer zur Längsachse des Messrohrs (2) verlaufendes Magnetfeld erzeugt, mit zumindest einer mit dem Medium koppelnden Messelektrode (3), die in einem im wesentlichen senkrecht zum Magnetfeld liegenden Bereich in einer Bohrung in der Wandung des Messrohrs (2) angeordnet ist, wobei das Magnetsystem zwei Spulen (4) mit Spulenachsen aufweist und wobei die Spulenachsen und die Messelektrode (3) in einer gemeinsamen Ebene liegen, **dadurch gekennzeichnet,**
**dass** das Messrohr (2) und das Magnetsystem an einer ebenen Leiterplatte (1) verankert sind,
wobei die gemeinsame Ebene der Spulenachsen und der Messelektrode (3) die Ebene der ebenen Leiterplatte ist.

2. Magnetisch-induktives Durchflussmessgerät nach Anspruch 1,
**dadurch gekennzeichnet,**
**dass** die Leiterplatte (1) eine zum Messrohr (2) kongruente Bohrung (8) aufweist, in welche das Messrohr (2) eingeführt ist.

3. Magnetisch-induktives Durchflussmessgerät nach Anspruch 1 oder 2,
**dadurch gekennzeichnet,**
**dass** die Leiterplatte (1) eine zu dem Magnetsystem kongruente Bohrung (9) aufweist, in welche das Magnetsystem zumindest teilweise eingeführt ist.

4. Magnetisch-induktives Durchflussmessgerät nach einem der Ansprüche 1 bis 3,
**dadurch gekennzeichnet,**
**dass** das Messrohr (2) in einem Urformverfahren hergestellt ist, wobei die Leiterplatte (1) Teil des formgebenden Werkzeugs ist.

5. Magnetisch-induktives Durchflussmessgerät nach einem der Ansprüche 1 bis 4,
**dadurch gekennzeichnet,**
**dass** das Messrohr (2) eine Nennweite kleiner oder gleich DN 100 aufweist.

6. Magnetisch-induktives Durchflussmessgerät nach einem der Ansprüche 1 bis 5,
**dadurch gekennzeichnet,**
**dass** weitere Elektronikbauteile zumindest zur Weiterverarbeitung der von der Messelektrode (3) abgegriffenen Spannungen auf der Leiterplatte (1) verankert sind.

7. Magnetisch-induktives Durchflussmessgerät nach einem der Ansprüche 1 bis 6,
**dadurch gekennzeichnet,**
**dass** ein USB-Anschluss zur Energieversorgung der Elektronikbauteile auf der Leiterplatte (1) verankert ist.

8. Magnetisch-induktives Durchflussmessgerät nach einem der Ansprüche 1 bis 7,
**dadurch gekennzeichnet,**
**dass** es ein Gehäuse um die Leiterplatte (1) aufweist, welches die Elektronikbauteile auf der Leiterplatte (1) umgibt, wobei es eine Bohrung zur Durchführung des Messrohrs (2) aufweist.

## Claims

1. Electromagnetic flowmeter with a measuring tube (2) through which medium flows, during operation, in the direction of the longitudinal axis of the measuring tube (2), and with a magnet system, which is designed in such a way that it generates a magnetic field that passes through the measuring tube (2) and is essentially perpendicular to the longitudinal axis of the measuring tube (2), with at least one measuring electrode (3) coupled with the medium, said electrode being arranged in an area, which is essentially perpendicular to the magnetic field, in a bore in the wall of the measuring tube (2),
wherein the magnet system has two coils (4) with coil axes, and wherein the coil axes and the measuring electrode (3) are located on a common plane,
**characterized in that**
the measuring tube (2) and the magnet system are anchored on a planar printed circuit board (1),
wherein the common plane of the coil axes and the measuring electrode (3) is the plane of the planar printed circuit board.

2. Electromagnetic flowmeter as claimed in Claim 1,
**characterized in that**
the printed circuit board (1) has a bore (8) that is congruent with the measuring tube (2), the measuring tube (2) being introduced into said bore.

3. Electromagnetic flowmeter as claimed in Claim 1 or 2,
**characterized in that**
the printed circuit board (1) has a bore (9) that is congruent with the magnet system, the magnet system being introduced into said bore at least partially.

4. Electromagnetic flowmeter as claimed in one of the Claims 1 to 3,
**characterized in that**
the measuring tube (2) is fabricated in a primary molding process, wherein the printed circuit board (1) forms part of the forming tool.

5. Electromagnetic flowmeter as claimed in one of the Claims 1 to 4, **characterized in that**
the measuring tube (2) has a nominal diameter less than or equal to DN 100.

6. Electromagnetic flowmeter as claimed in one of the Claims 1 to 5,
**characterized in that**
additional electronic components are anchored on the printed circuit board (1) at least for the purpose of further processing the voltages measured by the measuring electrode (3).

7. Electromagnetic flowmeter as claimed in one of the Claims 1 to 6,
**characterized in that**
a USB connection is anchored on the printed circuit board (1) for the supply of energy to the electronic components.

8. Electromagnetic flowmeter as claimed in one of the Claims 1 to 7,
**characterized in that**
there is a housing around the printed circuit board (1), said housing surrounding the electronic components on the printed circuit board (1), and wherein the housing has a bore for the passage of the measuring tube (2).

## Revendications

1. Débitmètre magnéto-inductif avec un tube de mesure (2), lequel est parcouru en fonctionnement par un produit en direction de l'axe longitudinal du tube de mesure (2), et avec un système magnétique, lequel est conçu de telle sorte à générer un champ magnétique traversant le tube de mesure pour l'essentiel perpendiculairement à l'axe longitudinal du tube de mesure (2), avec au moins une électrode de mesure (3) couplée avec le produit, laquelle électrode est disposée pour l'essentiel perpendiculairement à la zone se trouvant dans le champ magnétique, dans un perçage de la paroi du tube de mesure (2),
pour lequel le système magnétique comporte deux bobines (4) avec des axes de bobine, et pour lequel les axes de bobine et l'électrode de mesure (3) se situent dans un plan commun,
**caractérisé**
**en ce que** le tube de mesure (2) et le système magnétique sont ancrés sur un circuit imprimé (1) planaire,
le plan commun des axes de bobine et de l'électrode de mesure (3) étant le plan du circuit imprimé planaire.

2. Débitmètre magnéto-inductif selon la revendication 1,
**caractérisé**
**en ce que** le circuit imprimé (1) comporte un perçage (8) congruent par rapport au tube de mesure (2), perçage dans lequel le tube de mesure (2) est introduit.

3. Débitmètre magnéto-inductif selon la revendication 1 ou 2,
**caractérisé**
**en ce que** le circuit imprimé (1) comporte un perçage (9) congruent par rapport au système magnétique, perçage dans lequel le système magnétique est introduit au moins partiellement.

4. Débitmètre magnéto-inductif selon l'une des revendications 1 à 3,
**caractérisé**
**en ce que** le tube de mesure (2) est fabriqué selon un procédé de formage primaire, le circuit imprimé (1) fait partie intégrante de l'outil de formage.

5. Débitmètre magnéto-inductif selon l'une des revendications 1 à 4,
**caractérisé**
**en ce que** le tube de mesure (2) présente un diamètre nominal inférieur ou égal à DN 100.

6. Débitmètre magnéto-inductif selon l'une des revendications 1 à 5,
**caractérisé**
**en ce que** des composants électroniques supplémentaires sont ancrés au moins pour le traitement aval des tensions prélevées par l'électrode de mesure (3) sur le circuit imprimé (1).

7. Débitmètre magnéto-inductif selon l'une des revendications 1 à 6,
**caractérisé**
**en ce qu'**une prise USB est ancrée sur le circuit imprimé (1) pour l'alimentation en énergie des composants électroniques.

8. Débitmètre magnéto-inductif selon l'une des revendications 1 à 7,
**caractérisé**
**en ce qu'**il présente un boîtier autour du circuit imprimé (1), lequel boîtier entoure les composants électroniques sur le circuit imprimé (1), et lequel boîtier présente un perçage pour l'introduction du tube de mesure (2).
